# EUROPÄISCHE PATENTSCHRIFT

(11) **EP 3 208 393 B1**
(45) Veröffentlichungstag und Bekanntmachung des Hinweises auf die Patenterteilung: **23.10.2019**
(21) Anmeldenummer: 17173446.0
(22) Anmeldetag: 30.05.2017
(51) Int. Cl.: E03D 9/16, E03D 1/34

(54) **SPÜLSTROMDROSSEL**
FLUSHING FLOW CHOKE
RESTRICTEUR DE FLUX DE RINÇAGE

(43) Veröffentlichungstag der Anmeldung: 23.08.2017
(73) Patentinhaber: Geberit International AG, 8645 Jona (CH)
(72) Erfinder: MAHLER, Alfred, 8630 Rüti (CH)
(74) Vertreter: Frischknecht, Harry Ralph

(56) Entgegenhaltungen:
- WO-A1-2016/105295
- WO-A1-2017/036877
- DE-U1-202016 101 412

## Beschreibung

### TECHNISCHES GEBIET

Die vorliegende Erfindung betrifft eine Ablaufgarnitur für einen Spülkasten nach dem Oberbegriff von Anspruch 1.

### STAND DER TECHNIK

Aus dem Stand der Technik sind Ablaufgarnituren bekannt geworden. Im Zusammenhang mit spülrandlosen Toilettenschüsseln sind zudem Ablaufgarnituren bekannt geworden, welche Drosselelemente aufweisen. Beispielsweise offenbart die DE 20 2016 101 412 U eine Spülkastenanordnung mit einem Drosselelement, welches zu einem veränderten Spülstrom führt.

Einige der Ausführungsformen der DE 20 2016 101 412 U zeigen Drosselelement mit kreissektorförmigen Durchgangssegmenten. Diese Drosselelemente sind bezüglich des Strömungsverhaltens nachteilig.

Weiter ist aus der WO 2017/036877 ein Spülventil bekannt geworden, welches verschiedene Arten von Drosseln zeigt. Die in dieser Druckschrift gelehrten Drosseln haben den Nachteil, dass die offenbarten Drosselformen sich negativ auf die Strömungsverhältnisse auswirken.

### DARSTELLUNG DER ERFINDUNG

Der vorliegenden Erfindung liegt die Aufgabe zugrunde, eine Ablaufgarnitur anzugeben, welche die Nachteile des Standes der Technik überwindet. Insbesondere ist es eine Aufgabe der vorliegenden Erfindung, eine Ablaufgarnitur anzugeben, welche ein verbessertes Strömungsverhalten aufweist.

Diese Aufgabe löst der Gegenstand vom Anspruch 1. Demgemäss umfasst eine Ablaufgarnitur für einen Spülkasten einen Ventilkörper mit einem mit einem Ventilsitz zusammenarbeitenden Dichtungselement, wobei der Ventilkörper mit dem Dichtungselement vom Ventilsitz entlang einer Mittelachse von einer Ruhelage in Spüllage und von der Spüllage in die Ruhelage bewegbar ist, ein Ventilgehäuse, in welchem der Ventilkörper bewegbar gelagert ist, und eine Halterungseinheit mit einer durchgehenden Abflussöffnung, wobei sich der besagte Ventilsitz um die Abflussöffnung herum erstreckt und wobei in Einbaulage gesehen oberhalb des Ventilsitzes die Halterungseinheit einen Lagerabschnitt zur Lagerung des Ventilgehäuses aufweist. Die Ablaufgarnitur umfasst ein einstellbares Drosselelement zur einstellbaren Drosselung des durch die Abflussöffnung abfliessenden Spülwasserstroms. Das Drosselelement weist mindestens ein oberes Drosselsegment mit einer Drosselfläche, die die Form eines Segmentes einer Mantelfläche eines Kegels hat, und mindestens ein unteres Drosselsegment mit einer Drosselfläche, die die Form eines Segmentes einer Mantelfläche eines Kegels hat, auf. Die Drosselsegmente sind relativ zueinander verschiebbar, derart, dass der Querschnitt des Drosselelementes veränderbar ist. Durch die Veränderung des Querschnitts wird eine unterschiedliche Drosselung des durchfliessenden Spülwassers erreicht.

Durch die Ausbildung der Mantelfläche als Kegelsegment ergeht der Vorteil, dass das Drosselelement vorteilhaft angeströmt wird, weil die Strömung durch die kegelförmige Ausbildung gleichmässig aufgeteilt und gegen die Wandung der Abflussöffnung strömt. Folglich weist das Drosselelement durch die Kegelfläche ein verbessertes Anströmverhalten auf.

Unter einem einstellbaren Drosselelement wird verstanden, dass dieses derart einstellbar ist, dass die Drosselwirkung des Drosselelementes veränderbar ist. Unter einem Kegelsegment wird ein Teil einer Oberfläche eines Kegels bzw. eines Konus verstanden.

Das Drosselelement ist mit dem oberen Drosselsegment und dem unteren Drosselsegment zweiteilig ausgebildet. Vorzugsweise ist eines der Drosselsegmente mit einer Aufnahme in der Abflussöffnung in Verbindung bringbar, und das andere Drosselsegment ist relativ zum feststehenden Drosselsegment entlang einer Einstellbewegung einstellbar, insbesondere verschwenkbar.

Vorzugsweise ist die kegelförmige Mantelfläche der Drosselsegmente derart orientiert, dass die Kegelspitze in Fliessrichtung des Spülwassers gesehen, zuerst mit dem Spülwasser in Kontakt kommt und dass das Spülwasser dann über die Mantelfläche bis hin zu der Stelle des Kegels mit der maximalen Ausdehnung strömt.

Vorzugsweise wird das untere Drosselsegment in einer ersten Endstellung in Strömungsrichtung gesehen im Wesentlichen vollständig durch das obere Drosselsegment überdeckt und das untere Drosselsegment lässt sich in Richtung einer zweiten Endstellung derart verschieben, dass der Grad der Überdeckung der beiden Drosselsegmente mit zunehmender Verschiebung abnimmt, wobei die Drosselwirkung des Drosselelementes insgesamt zunimmt. Mit abnehmender Überdeckung wird die Mantelfläche insgesamt und somit auch die Drosselwirkung grösser.

Vorzugsweise liegt das untere Drosselsegment in der zweiten Endstellung derart zum oberen Drosselsegment, dass das untere Drosselsegment mindestens teilweise unter dem oberen Drosselsegment hinausragt.

Vorzugsweise liegen die Drosselsegmente in der zweiten Endstellung derart zueinander, dass ein im Wesentlichen vollständig um die Mittelachse umlaufender Kegel resultiert.

Vorzugsweise ist die Spülmenge bei einem Durchmesser der Abflussöffnung von 45 Millimetern in der ersten Endstellung im Bereich von 2.3 bis 2.5 Liter pro Sekunde, bei einer mittleren Öffnungsstellung bei 2.0 bis 2.2 Liter pro Sekunde, und bei der zweiten Endstellung bei 1.7 bis 1.9 Liter pro Sekunde ist.

Die erste Endstellung ist somit die Stellung, bei welcher die Drosselung bei eingesetztem Drosselelement am kleinsten ist, während die zweite Endstellung die Stellung ist, bei welcher die Drosselung bei eingesetztem Drosselelement maximal ist.

Vorzugsweise ist die Zahl der oberen Drosselsegmente gleich der Zahl der unteren Drosselsegmente. Vorzugsweise ist die winklige Abdeckung um die Mittelachse herum für jedes der Drosselsegmente gleich. Hierdurch kann eine gute symmetrische Abdeckung erreicht werden, was für die Strömungsverluste optimal ist.

Vorzugsweise sind jeweils die oberen Drosselsegmente miteinander verbunden und daher miteinander verschwenkbar. Gleiches gilt vorzugsweise auch für die unteren Drosselsegmente, wobei jeweils die unteren Drosselsegmente miteinander verbunden sind und daher miteinander verschwenkbar sind.

Vorzugsweise steht das untere Drosselsegment mit dem oberen Drosselsegment bewegbar, insbesondere verschwenkbar, in Verbindung, wobei eines der Drosselsegmente ortsfest in der Abflussöffnung angeordnet ist, während das andere der Drosselsegmente relativ zum orstfest angeordneten Drosselsegment einstellbar ist. Vorzugsweise ist das obere Drosselsegment ortsfest angeordnet.

Vorzugsweise ist das untere Drosselsegment an einem Drehlager, unterseitig am oberen Drosselelement angeordnet ist und über das Drehlager bewegbar gelagert.

Vorzugsweise liegen die beiden Drosselsegmente mittig in der Abflussöffnung. Das heisst, der Kegel bzw. das Kegelsegment spannt sich mittig in der Abflussöffnung auf, wodurch das Spülwasser konzentrisch zur Mittelachse gegen die Wandung der Abflussöffnung gedrückt wird. Hierdurch kann das Strömungsverhalten weiter verbessert werden.

Vorzugsweise ist bei jeder Stellung der Drosselsegmente zwischen den Drosselsegmenten und der Abflussöffnung eine lichte Öffnung in der Gestalt eines Segmentes eines Kreisrings vorhanden. Das heisst, dass Spülwasser durchströmt in den Bereichen, in welchen es von einer Kegelfläche abgelenkt wird, durch einen Ringspalt, der die Form eines Teiles eines Kreisrings aufweist.

Vorzugsweise weist das mindestens eine obere Drosselsegment mindestens ein Lagerungsarm auf, welcher in mindestens eine im Bereich der Abflussöffnung angeordnete Aufnahme eingreift. Das Drosselelement ist, insbesondere bei Bedarf, in die Aufnahme einsetzbar.

Vorzugsweise erstrecken sich genau zwei Lagerarme beidseitig und diameteral gegenüber einander vom Drosselsegment weg.

Die Aufnahme liegt in Einbaulage gesehen vorzugsweise unterhalb des Ventilsitzes, wodurch auch das Drosselelement vorzugsweise unterhalb des Ventilsitzes liegt. Hierdurch wird das Drosselelement optimal angeströmt.

Vorzugsweise ist die Aufnahme an der die Abflussöffnung begrenzenden Seitenwand angeordnet.

Vorzugsweise ist das Drosselelement separat von der Halterungseinheit ausgebildet. Hierdurch kann je nach strömungstechnischer Situation das Drosselelement eingesetzt werden oder ggf. weggelassen werden. Das heisst, das Drosselelement ist bei Bedarf einer Drosselung einsetzbar. Ein weiterer Vorteil ergeht also durch die bedarfsweise Einsetzbarkeit des Drosselelementes in die Abflussöffnung hinein. Der Sanitärinstallateur kann das Drosselelement grundsätzlich von der Abflussöffnung entfernen. Dies ist insbesondere von Vorteil, wenn die Konfiguration derart ist, dass keine Drosselung benötigt wird.

Vorzugsweise ist die Verbindung zwischen dem mindestens einen Lagerungsarm und der Aufnahme eine Rastverbindung.

Vorzugsweise erstreckt sich das Segment des Kreisrings abgesehen von den Lagerarmen sich vollständig um die Mittelachse herum. Hierdurch kann eine symmetrische Strömungssituation erreicht werden.

Vorzugsweise ist der Kegelwinkel des Kegels grösser als 90°. Vorzugsweise ist der Kegel an der Kegelspitze gerundet oder abgeflacht oder spitz ausgebildet.

Die Abflussöffnung weist vorzugsweise einen kreiszylindrischen Querschnitt auf und erstreckt sich entlang einer Mittelachse. Vorzugsweise stehen das Ventilgehäuse und die Abflussöffnung derart zueinander, dass die jeweiligen Mittelachsen koaxial zueinander verlaufen. Zudem verläuft die Mittelachse der kegelförmigen Flächen ebenfalls kollinear zu den besagten Mittelachsen.

Vorzugsweise ist das Drosselelement im Wesentlichen vollständig im Inneren der Abflussöffnung angeordnet. Das heisst, dass das Drosselelement im eingesetzten Zustand vollständig im Inneren der Abflussöffnung liegt und nicht oder nur unwesentlich aus der Abflussöffnung hinaus ragt. Hierdurch wird eine kompakte Anordnung geschaffen.

Vorzugsweise ist das zweite Drosselsegment stufenlos zum ersten Drosselsegment einstellbar ist. In einer alternativen Ausführungsform ist das zweite Drosselsegment in determinierten Inkrementen zum ersten Drosselsegment einstellbar. Das heisst, das zweite Drosselsegment kann schrittweise zum ersten Drosselsegment eingestellt werden.

Besonders bevorzugt umfassen die beiden Drosselsegmente gegeneinander wirkende Anschlagselemente, wobei die Anschlagselemente die Relativbewegung zwischen den beiden Drosselsegmenten limitieren.

Vorzugsweise weist die Halterungseinheit seitliche Einlassöffnungen auf, welche in Einbaulage oberhalb des Ventilsitzes und im Wesentlichen unterhalb des Lagerabschnittes angeordnet sind. Über diese Einlassöffnungen gelangt das Spülwasser dann zur Abflussöffnung.

Vorzugsweise weist die Halterungseinheit ein aussenseitig und in Einbaulage unterhalb des Ventilsitzes liegender Kontaktabschnitt zum Einbau in einen Spülkasten auf. Der Kontaktabschnitt ist aussenseitig vorzugsweise kreiszylindrisch ausgebildet und weist vorzugsweise eine Aufnahmerille für die Aufnahme einer Dichtung auf.

Eine Spülkastenanordnung umfasst eine Ablaufgarnitur nach obiger Beschreibung und ein Spülkasten mit einer Auslauföffnung, wobei die Halterungseinheit sich in die Auslauföffnung hinein erstreckt. Insbesondere ragt der Kontaktabschnitt in die Auslauföffnung ein.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Schnittansicht einer Ablaufgarnitur mit einem Drosselelement gemäss einer Ausführungsform der vorliegenden Erfindung;
- Fig. 2: eine Schnittdarstellung der Ablaufgarnitur nach Figur 1;;
- Fig. 3a/b/c: Ansichten des Drosselelementes nach Figur 1 in einer ersten Endlage;
- Fig. 4a/b/c: Ansichten des Drosselelementes nach Figur 1 in einer mittleren Lage;
- Fig. 5a/b/c: Ansichten des Drosselelementes nach Figur 1 in einer zweiten Endlage; und
- Fig. 6: eine perspektivische Explosionsdarstellung des Drosselelementes.

### BESCHREIBUNG BEVORZUGTER AUSFÜHRUNGSFORMEN

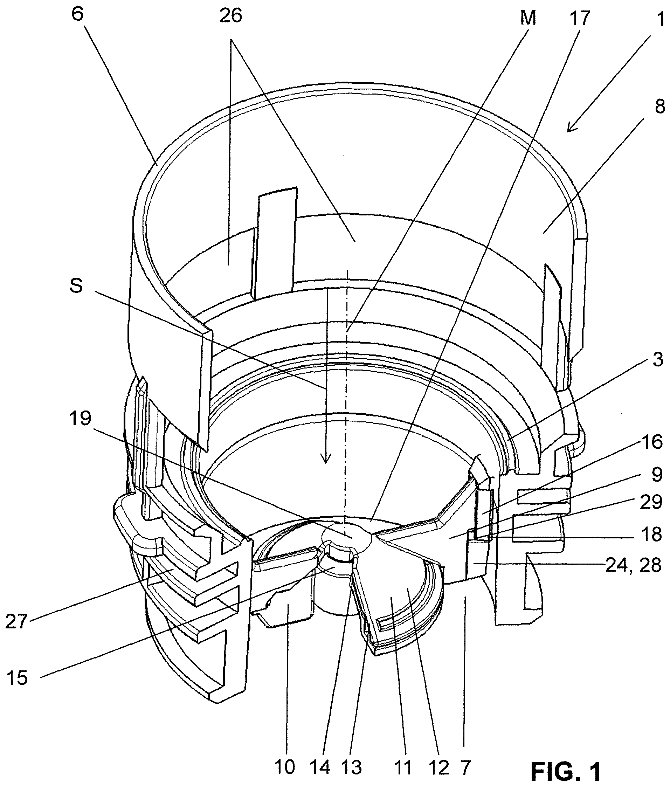

In der Figur 1 wird eine perspektivische Schnittansicht einer Ablaufgarnitur 1 für einen Spülkasten gezeigt. Die Ablaufgarnitur 1 dient der kontrollierten Entnahme von Spülwasser aus dem Spülkasten.

Die Ablaufgarnitur 1 umfasst im Wesentlichen einen Ventilkörper 2 mit einem Dichtungselement 4, das mit einem Ventilsitz 3 zusammenarbeitet, ein Ventilgehäuse 5, in welchem der Ventilkörper 2 bewegbar gelagert ist, und eine Halterungseinheit 6 mit einer durchgehenden Abflussöffnung 7. Die Halterungseinheit 6 dient der Verbindung des Ventilgehäuses 5 mit dem Spülkasten und durch die Abflussöffnung 7 fliesst das Spülwasser aus dem Spülkasten ab. Die Halterungseinheit 6 ragt in eine Öffnung im Spülkasten hinein oder hindurch. Der Spülkasten ist in den Figuren nicht dargestellt. Das Ventilgehäuse 5 wird in einem Lagerungsabschnitt 8 der Halterungseinheit 6 gehalten.

Der Ventilkörper 2 ist mit dem Dichtungselement 4 vom Ventilsitz 3 entlang einer Mittelachse M von einer Ruhelage in eine Spüllage und von der Spüllage in die Ruhelage bewegbar. Für die Bewegung sind entsprechende Steuerungselemente vorhanden, welche in den Figuren nicht gezeigt sind.

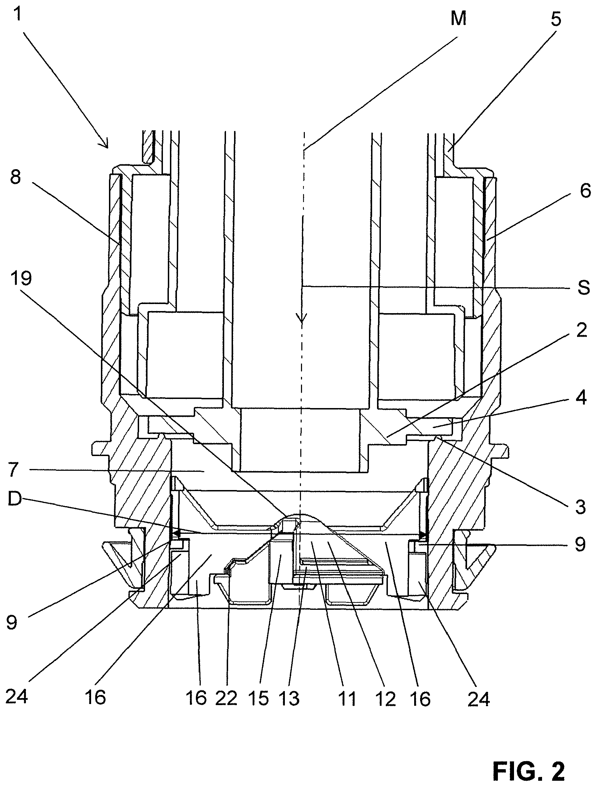

Weiter umfasst die Ablaufgarnitur 1 ein bei Bedarf einsetzbares Drosselelement 10 zur Drosselung des durch die Abflussöffnung 7 abfliessenden Spülwasserstroms. Das Drosselelement 10 wird in den Figuren 2 bis 6 genauer dargestellt.

Die Halterungseinheit 6 umfasst in der gezeigten Ausführungsform eine Aufnahme 9 für das Drosselelement 10, wobei die Aufnahme 9 in Einbaulage der Ablaufgarnitur 1 unterhalb des Ventilsitzes 3 angeordnet ist. Das heisst, das Drosselelement 10 zur Drosselung des durch die Abflussöffnung 7 abfliessenden Spülwasserstroms ist in die Aufnahme 9 einsetzbar und von der Aufnahme 9 wiederum entfernbar.

Die Aufnahme 9 ist in der gezeigten Ausführungsform im Inneren der Abflussöffnung 7 angeordnet. Insbesondere ist die Aufnahme 9 an der die Abflussöffnung 7 begrenzenden Seitenwand angeordnet. Das Drosselelement 10 ist also in die Abflussöffnung 7 einsetzbar und drosselt in der Abflussöffnung 7 den Spülwasserstrom. Das Drosselelement 10 steht somit in Verbindung mit der Halterungseinheit 6.

Das Drosselelement 10 ist mit der Aufnahme 9 fest in Verbindung bringbar. Unter einer festen Verbindung wird in diesem Zusammenhang eine drehfeste Verbindung verstanden. Das heisst, das Drosselelement 10 kann in die Aufnahme 9 eingesetzt werden und ist in der Aufnahme 9 fest mit der Aufnahme 9 verbunden. Bei Nichtverwendung des Drosselelementes 10 kann das Drosselelement 10 von der Aufnahme 9 getrennt werden.

Das Drosselelement 10 umfasst mindestens ein oberes Drosselsegment 11 mit einer Drosselfläche 12 und mindestens ein unteres Drosselsegment 13 mit einer Drosselfläche 14. In der gezeigten Ausführungsform umfasst sind zwei miteinander fest in Verbindung stehende obere Drosselsegmente 11 und zwei miteinander fest in Verbindung stehende untere Drosselsegmente 13 angeordnet. Die Zahl der Drosselsegmente 11, 13 kann auch kleiner sein. Sofern eine feinere Abstufung der Drosselwirkung erwünscht ist, kann die Zahl auch grösser sein.

In der gezeigten Ausführungsform ist die Zahl der oberen Drosselsegmente 11 gleich der Zahl der unteren Drosselsegmente 13.

Die unteren Drosselsegmente 13 liegen bezüglich der Mittelachse M diametral gegenüber einander. Gleiches gilt für die oberen Drosselsegmente 11.

Die Drosselflächen 12, 14 haben die Form eines Segmentes einer Mantelfläche eines Kegels. Das heisst die Drosselflächen 12, 14 haben die Form eines Teils einer Mantelfläche eines Kegels. In der gezeigten Ausführungsform weist jede der Drosselflächen 12, 14 die Form eines Viertels einer Mantelfläche eines Kegels auf. Zusammengesetzt ergeben dabei die Mantelflächen einen gesamten Kegel.

Die Drosselsegmente 11, 13 bzw. in der gezeigten Ausführungsform das Paar der oberen Drosselsegmente 11 und das Paar der unteren Drosselsegment 13 sind relativ zueinander verschiebbar. Die Verschiebung ist derart, dass der Querschnitt des Drosselelementes 10 und damit einhergehend auf der Querschnitt der Abflussöffnung 7 veränderbar ist.

Das Drosselelement 10 ist mit dem mindestens einen oberen Drosselsegment 11 und dem mindestens einen unteren Drosselsegment 13 zweiteilig ausgebildet. Dabei bilden in der gezeigten Ausführungsform das Paar der oberen Drosselsegmente 11 ein erstes Teil und das Paar der unteren Drosselsegmente 13 ein zweites Teil. Das mindestens eine untere Drosselsegment 13 ist relativ zum mindestens einen oberen Drosselsegment 11 entlang einer Einstellbewegung einstellbar, hier verschwenkbar. Durch die Verschwenkung des unteren Drosselsegmentes 13 zum oberen Drosselsegment 11 sind mehrere Drosselgrade erreichbar.

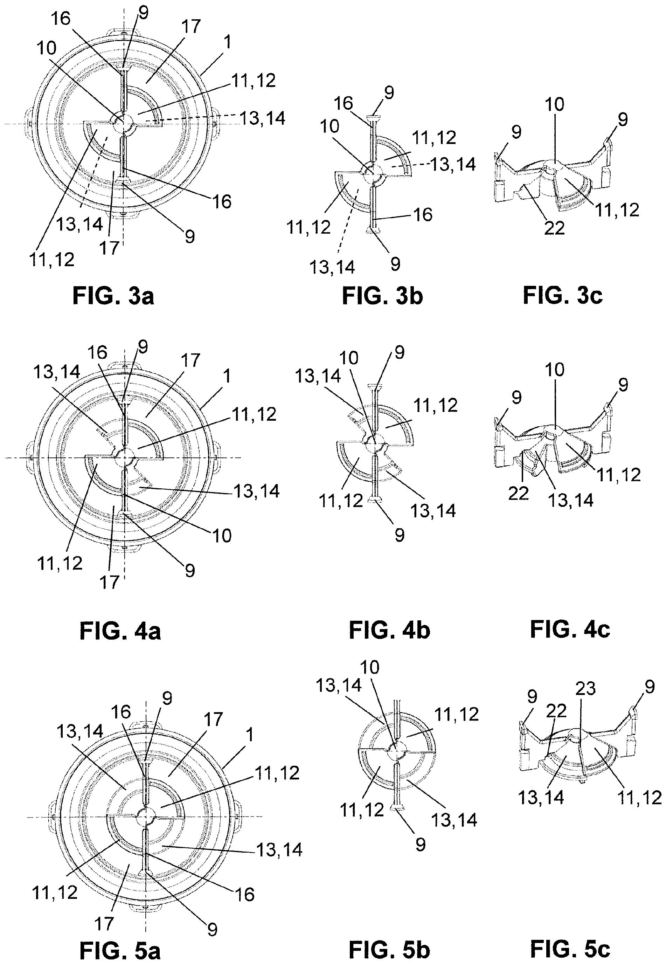

In den Figuren 3a bis 5c werden verschiedene Ansichten von verschiedenen Stellungen des Drosselelements 10 gezeigt.

In der Figur 3a bis 3c wird die erste Endstellung gezeigt. In der ersten Endstellung liegen die beiden oberen Drosselsegmente 11 über den beiden unteren Drosselsegmenten 13. Die beiden unteren Drosselelement 13 sind dabei in Strömungsrichtung S gesehen im Wesentlichen vollständig durch die beiden oberen Drosselsegmente 11 überdeckt. Das heisst gegen die Strömung S steht im Wesentlichen die Drosselfläche 12 der oberen Drosselsegmente 11 eine Drosselung bzw. einen Widerstand bereit.

Das untere Drosselsegment 13 lässt sich von dieser ersten Endstellung in eine zweite Endstellung verschieben.

Eine Zwischenposition zwischen der ersten und der zweiten Endstellung wird in den Figuren 4a bis 4c gezeigt. Dort befinden sich die beiden unteren Drosselsegmente 13 im Wesentlichen auf halber Strecke zwischen den beiden Endstellungen. Dabei ragen die unteren Drosselsegmente 13 mit ihrer Drosselfläche 14 jeweils unter den oberen Drosselsegmenten 11 hervor und stellen mit ihrer Drosselfläche 14 ebenfalls einen Widerstand bzw. eine Drosselung gegen die Strömungsrichtung S bereit.

In den Figuren 5a bis 5c wird sodann die zweite Endstellung gezeigt. Hier liegt das untere Drosselsegment 13 derart zum oberen Drosselsegment 11, dass die Drosselflächen 12, 14 von beiden Drosselsegmenten 11, 13 einen Wiederstand gegen die Strömung S bereitstellen. In dieser Endstellung bilden die beiden oberen Drosselsegmente 11 und die beiden unteren Drosselsegmente 13 eine gemeinsame Drosselfläche, welche mit Absätzen 23 im Wesentlichen der vollständig um die Mittelachse M umlaufenden Mantelfläche eines Kegels entspricht. Dies wird in der Figur 5c gezeigt.

In allgemeiner Form kann gesagt werden, dass sich das mindestens eine untere Drosselsegment 13 relativ zum mindestens einen oberen Drosselsegment 11 von der ersten Endstellung Richtung der zweiten Endstellung derart verschieben lässt, dass der Grad der Überdeckung zwischen dem oberen und dem unteren Drosselsegment 11, 13 mit zunehmender Verschiebung abnimmt, wobei die Drosselwirkung des Drosselelementes 10 dann insgesamt zunimmt.

Die Spülmenge bei einem Durchmesser D der Abflussöffnung 7 von 45 Millimetern ist in der ersten Endstellung, wie in den Figuren 3a bis 3c gezeigt, vorzugsweise im Bereich von 2,3 bis 2,5 Liter pro Sekunde. Bei einer mittleren Öffnungsstellung, wie in den Figuren 4a bis 4c gezeigt, ist eine Spülmenge von 2,0 bis 2,2 Liter pro Sekunde bevorzugt. Bei der zweiten Endstellung, wie in den Figuren 5a bis 5c gezeigt wird, ist eine Spülmenge von 1,7 bis 1,9 Liter pro Sekunde bevorzugt.

Das mindestens eine untere Drosselsegment 13 steht mit dem mindestens einen oberen Drosselsegment 11 bewegbar, hier verschwenkbar, in Verbindung. Das obere Drosselsegment 11 ist ortsfest in der Abflussöffnung 7 angeordnet, während das untere Drosselsegment 13 relativ zum ortsfest angeordneten Drosselsegment 11 einstellbar ist. In der gezeigten Ausführungsform ist das untere Drosselsegment 13 an ein Drehlager 15 unterseitig am oberen Drosselsegment 11 angeordnet und über das Drehlager 15 bewegbar gelagert. Das Drehlager 15 hat in der gezeigten Ausführungsform die Gestalt eines vom oberen Drosselsegment 13 abragenden Zapfens 20, welcher in eine Öffnung 21, am unteren Drosselsegment 13 einragt.

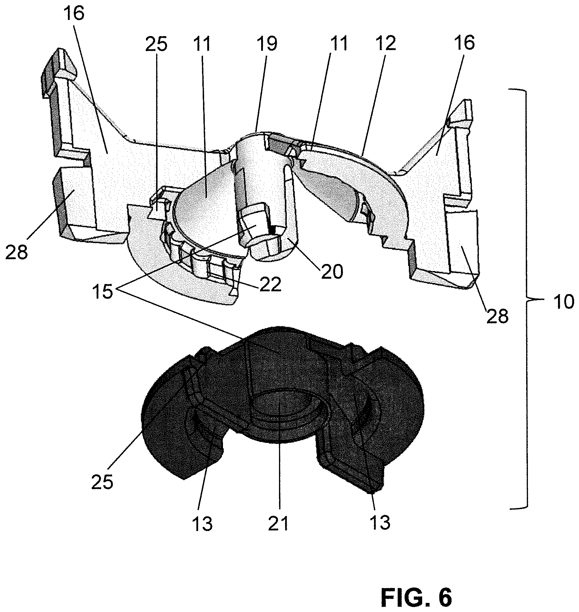

Des weiteren wird in der Figur 6 gezeigt, dass eine Raststruktur 22 zwischen den Drosselsegmenten 11, 13 angeordnet ist. Die Raststruktur 22 erlaubt ein inkrementelles Einstellen der Drosselsegmente 11, 13 zueinander.

Das Drosselelement 10 steht, wie oben erläutert, mit der Aufnahme 9 in Verbindung. Hierzu weist das mindestens eine obere Drosselsegment 11 mindestens ein Lagerungsarm 16 auf. Hier sind zwei Lagerungsarme 16 angeordnet, welche sich diametral voneinander von dem Paar der oberen Drosselsegmente 11 wegerstrecken angeordnet. Die Lagerungsarme 16 greifen in mindestens eine im Bereich der Abflussöffnung 7 angeordnete Aufnahme 9 ein.

Die der Strömung entgegengesetzte Fläche der Lagerungsarme 16 ist gerundet ausgebildet. Zudem erhöht sich der Querschnitt der Lagerungsarme zur Wandung der Abflussöffnung 7 hin.

Endseitig weisen die Lagerungsarme 16 eine Raststruktur 24 auf, welche mit der Aufnahme 9 eine Rastverbindung eingehen. Somit kann das Drosselelement 10 über eine Rastverbindung mit der Aufnahme 9 verbunden werden. Bei der Raststruktur 24 handelt es sich in der gezeigten Variante um eine am Lagerungsarm 16 angeformte Federlasche 28, welche bei der Montage elastisch verformt wird, und an einer Anschlagsfläche 29 an der Aufnahme nach erfolgter Montage ansteht.

Von den Figuren 4a bis 6 kann weiter erkannt werden, dass bei jeder Stellung der Drosselsegmente 11, 13 zwischen den Drosselsegmenten 11, 13 und der Abflussöffnung 7 eine lichte Öffnung in der Gestalt eines Segmentes 17 eines Kreisrings vorhanden ist. Der Kreisring ist im Wesentlichen umlaufend um die Mittelachse M ausgebildet und wird in der gezeigten Ausführungsform nur durch eine die Lagerungsarme 16 durchtrennt.

Weiter weisen die Drosselsegmente 11, 13 gegeneinander wirkende Anschlagselemente 25 auf. Die Anschlagselemente 25 limitieren dabei die relative Bewegung zwischen den beiden Drosselsegmente 11, 13.

Die Halterungseinheit 6 weist weiterhin seitliche Einlassöffnungen 26 auf. Die Einlassöffnungen 26 sind in Einbaulage gesehen oberhalb des Ventilsitzes 3 angeordnet und sind im Wesentlichen unterhalb des Lagerabschnittes 8, mit welchem das Ventilgehäuse 5 verbindbar ist, angeordnet. Über die Einlassöffnungen 26 strömt Spülwasser zur Abflussöffnung 7 und somit zum Drosselelement 10 zu.

Der Lagerabschnitt 8 ist hier im Wesentlichen als zylindrische Aufnahme ausgebildet und dient der Aufnahme eines entsprechenden zylindrischen Abschnittes des Ventilgehäuses 5.

Aussenseitig umfasst die Halterungseinheit 6 einen Kontaktabschnitt 27. Der Kontaktabschnitt 27 dient zum Einbau der Halterungseinheit 6 in einen Spülkasten. In der gezeigten Ausführungsform ist der Kontaktabschnitt 27 unterhalb des Ventilsitzes angeordnet.

**BEZUGSZEICHENLISTE**

| | | | |
|---|---|---|---|
| 1 | Ablaufgarnitur | 29 | Anschlagsfläche |
| 2 | Ventilkörper | M | Mittelachse |
| 3 | Ventilsitz | S | Strömungsrichtung |
| 4 | Dichtungselement | D | Durchmesser |
| 5 | Ventilgehäuse | | |
| 6 | Halterungseinheit | | |
| 7 | Abflussöffnung | | |
| 8 | Lagerabschnitt | | |
| 9 | Aufnahme | | |
| 10 | Drosselelement | | |
| 11 | oberes Drosselsegment | | |
| 12 | Drosselfläche | | |
| 13 | unteres Drosselsegment | | |
| 14 | Drosselfläche | | |
| 15 | Drehlager | | |
| 16 | Lagerungsarm | | |
| 17 | Kreisringsegment | | |
| 18 | Rastverbindung | | |
| 19 | Kegelspitze | | |
| 20 | Zapfen | | |
| 21 | Öffnung | | |
| 22 | Raststruktur | | |
| 23 | Absatz | | |
| 24 | Raststruktur | | |
| 25 | Anschlagselemente | | |
| 26 | Einlassöffnung | | |
| 27 | Kontaktabschnitt | | |
| 28 | Federlasche | | |

## Patentansprüche

1. Ablaufgarnitur (1) für einen Spülkasten, umfassend
einen Ventilkörper (2) mit einem mit einem Ventilsitz (3) zusammenarbeitenden Dichtungselement (4), wobei der Ventilkörper (2) mit dem Dichtungselement (4) vom Ventilsitz (3) entlang einer Mittelachse (M) von einer Ruhelage in Spüllage und von der Spüllage in die Ruhelage bewegbar ist,
ein Ventilgehäuse (5), in welchem der Ventilkörper (2) bewegbar gelagert ist, und
eine Halterungseinheit (6) mit einer durchgehenden Abflussöffnung (7), wobei sich der besagte Ventilsitz (3) um die Abflussöffnung (7) herum erstreckt und wobei in Einbaulage gesehen oberhalb des Ventilsitzes (3) die Halterungseinheit (6) einen Lagerabschnitt (8) zur Lagerung des Ventilgehäuses (5) aufweist,
wobei die Ablaufgarnitur (1) weiter ein einstellbares Drosselelement (10) zur einstellbaren Drosselung des durch die Abflussöffnung (7) abfliessenden Spülwasserstroms umfasst, wobei das Drosselelement (10) mindestens ein oberes Drosselsegment (11) mit einer Drosselfläche (12) und mindestens ein unteres Drosselsegment (13) mit einer Drosselfläche (14) aufweist, und wobei die Drosselsegmente (11, 13) relativ zueinander verschiebbar sind, derart, dass der Querschnitt des Drosselelementes (10) veränderbar ist, **dadurch gekennzeichnet, dass** die Drosselfläche (12) des mindestens einen oberen Drosselsegmentes (11) die Form eines Segmentes einer Mantelfläche eines Kegels hat, und dass die Drosselfläche (14) des mindestens einen unteren Drosselsegmentes (13) die Form eines Segmentes einer Mantelfläche eines Kegels hat.

2. Ablaufgarnitur (1) nach Anspruch 1, **dadurch gekennzeichnet, dass** das untere Drosselsegment (13) in einer ersten Endstellung in Strömungsrichtung (S) gesehen im Wesentlichen vollständig durch das obere Drosselsegment (11) überdeckt wird und dass sich das untere Drosselsegment (13) in Richtung einer zweiten Endstellung derart verschieben lässt, dass der Grad der Überdeckung der beiden Drosselsegmente (11, 13) mit zunehmender Verschiebung abnimmt, wobei die Drosselwirkung des Drosselelementes (10) insgesamt zunimmt.

3. Ablaufgarnitur (1) nach Anspruch 2, **dadurch gekennzeichnet, dass** in der zweiten Endstellung die Drosselsegmente (11, 13) derart zueinander liegen, dass ein im Wesentlichen vollständig um die Mittelachse (M) umlaufender Kegel resultiert.

4. Ablaufgarnitur (1) nach Anspruch 2 oder 3, **dadurch gekennzeichnet, dass** die Spülmenge bei einem Durchmesser (D) der Abflussöffnung (7) von 45 Millimetern in der ersten Endstellung der Drosselsegmente im Bereich von 2.3 bis 2.5 Liter pro Sekunde ist und bei einer mittleren Öffnungsstellung der Drosselsegmente bei 2.0 bis 2.2 Liter pro Sekunde ist und bei der zweiten Endstellung der Drosselsegmente bei 1.7 bis 1.9 Liter pro Sekunde ist.

5. Ablaufgarnitur (1) nach einem der vorhergehenden Ansprüche, **dadurch gekennzeichnet, dass** die Zahl der oberen Drosselsegmente (11) gleich der Zahl der unteren Drosselsegmente (13) ist.

6. Ablaufgarnitur (1) nach einem der vorhergehenden Ansprüche, **dadurch gekennzeichnet, dass** jeweils die oberen Drosselsegemente (11) miteinander verbunden sind und daher miteinander verschwenkbar sind; und/oder dass jeweils die unteren Drosselsegmente (13) miteinander verbunden sind und daher miteinander verschwenkbar sind.

7. Ablaufgarnitur (1) nach einem der vorhergehenden Ansprüche, **dadurch gekennzeichnet, dass** das untere Drosselsegment (13) mit dem oberen Drosselsegment (11) bewegbar, insbesondere verschwenkbar, in Verbindung steht, wobei eines der Drosselsegmente (11, 13) ortsfest in der Abflussöffnung angeordnet ist, während das andere der Drosselsegmente (13, 11) relativ zum orstfest angeordneten Drosselsegment (11, 13) einstellbar ist.

8. Ablaufgarnitur (1) nach einem der vorhergehenden Ansprüche, **dadurch gekennzeichnet, dass** das untere Drosselsegment (13) an einem Drehlager (15), unterseitig am oberen Drosselelement (11) angeordnet ist und über das Drehlager (15) bewegbar gelagert ist.

9. Ablaufgarnitur (1) nach einem der vorhergehenden Ansprüche, **dadurch gekennzeichnet, dass** die beiden Drosselsegmente (11, 13) mittig in der Abflussöffnung (7) liegen.

10. Ablaufgarnitur (1) nach einem der vorhergehenden Ansprüche, **dadurch gekennzeichnet, dass** bei jeder Stellung der Drosselsegmente (11, 13) zwischen den Drosselsegmenten (11, 13) und der Abflussöffnung (7) eine lichte Öffnung in der Gestalt eines Segmentes (17) eines Kreisrings vorhanden ist.

11. Ablaufgarnitur (1) nach einem der vorhergehenden Ansprüche, **dadurch gekennzeichnet, dass** das mindestens eine obere Drosselsegment (11) mindestens ein Lagerungsarm (16) aufweist, welcher in mindestens eine im Bereich der Abflussöffnung (7) angeordneten Aufnahme (9) eingreift, wobei das Drosselelement (10), insbesondere bei Bedarf, in die Aufnahme (9) einsetzbar ist.

12. Ablaufgarnitur (1) nach Anspruch 11, **dadurch gekennzeichnet, dass** die Verbindung zwischen dem mindestens einen Lagerungsarm (16) und der Aufnahme (9) eine Rastverbindung (18) ist.

13. Ablaufgarnitur (1) nach einem der Ansprüche 10 bis 12, **dadurch gekennzeichnet, dass** das Segment (17) des Kreisrings abgesehen von den Lagerarmen (16) sich vollständig um die Mittelachse (M) herum erstreckt.

14. Ablaufgarnitur (1) nach einem der vorhergehenden Ansprüche, **dadurch gekennzeichnet, dass** der Kegelwinkel (α) des Kegels grösser als 90° ist; und/oder dass der Kegel an der Kegelspitze (19) gerundet oder abgeflacht oder spitz ausgebildet ist.

15. Spülkastenanordnung umfassend einer Ablaufgarnitur (1) nach einem der vorhergehenden Ansprüche und ein Spülkasten mit einer Auslauföffnung, wobei die Halterungseinheit (6) sich in die Auslauföffnung hinein erstreckt.

## Claims

1. Drain fitting (1) for a toilet tank, comprising
a valve body (2) with a sealing element (4) that cooperates with a valve seat (3), wherein the valve body (2) with the sealing element (4) can be moved from the valve seat (3) along the central axis (M) from a rest position into a flushing position and from the flushing position into the rest position,
a valve housing (5), in which the valve body (2) can be moveably mounted, and a retaining unit (6) with a continuous discharge opening (7), wherein said valve seat (3) extends around the discharge opening (7) and wherein, as viewed in the installed position above the valve seat (3), the retaining unit (6) has a bearing section (8) for supporting the valve housing (5),
wherein the drain fitting (1) also comprises an adjustable throttle element (10) for the adjustable throttling of the flushing water stream that is flowing out through the discharge opening (7), wherein the throttling element (10) has at least one upper throttle segment (11) with a throttle surface (12) and at least one lower throttle segment (13) with a throttle surface (14),
and wherein the throttle segments (11, 13) can be displaced relative to each other such that the cross-section of the throttle element (10) can be modified,
**characterized in that** the throttle surface (12) of the at least one upper throttle segment (11) has the shape of a segment of a lateral surface of a cone, and **in that** the throttle surface (14) of the at least one lower throttle segment (13) has the shape of a segment of a lateral surface of a cone.

2. Drain fitting (1) according to Claim 1, **characterized in that** the lower throttle segment (13) in a first end position, as viewed in the flow direction (S), is substantially covered entirely by the upper throttle segment (11), and **in that** the lower throttle segment (13) can be displaced in the direction of a second end position in such a way that the degree of the covering of the two throttle segments (11, 13) decreases as the displacement increases, wherein the throttling effect of the throttle element (10) as a whole increases.

3. Drain fitting (1) according to Claim 2, **characterized in that**, in the second end position, the throttle segments (11, 13) are positioned relative to each other such that a cone is formed which substantially completely surrounds the central axis (M).

4. Drain fitting (1) according to Claim 2 or 3, **characterized in that**, with a diameter (D) of the discharge opening (7) measuring 45 millimetres, the flush volume is in the range from 2.3 to 2.5 litres per second when the throttle segments are in the first end position and is 2.0 to 2.2 litres per second when the throttle segments are in a central open position and is 1.7 to 1.9 litres per second when the throttle segments are in the second end position.

5. Drain fitting (1) according to one of the preceding claims, **characterized in that** the number of upper throttle segments (11) is equal to the number of lower throttle segments (13).

6. Drain fitting (1) according to one of the preceding claims, **characterized in that** the upper throttle segments (11) are connected to each other and can thus be pivoted with each other; and/or **in that** the lower throttle segments (13) are connected to each other and can thus be pivoted with each other.

7. Drain fitting (1) according to one of the preceding claims, **characterized in that** the lower throttle segment (13) is connected with the upper throttle segment (11) in such a way that it can be moved, especially pivoted, wherein one of the throttle segments (11, 13) is arranged in a stationary position in the discharge opening while the other of the throttle segments (13, 11) can be adjusted relative to the stationary throttle segment (11, 13).

8. Drain fitting (1) according to one of the preceding claims, **characterized in that** the lower throttle segment (13) is arranged on a rotary bearing (15) on the lower side of the upper throttle element (11) and is moveably mounted via the rotary bearing (15).

9. Drain fitting (1) according to one of the preceding claims, **characterized in that** the two throttle segments (11, 13) are located centrally in the discharge opening (7).

10. Drain fitting (1) according to one of the preceding claims, **characterized in that**, at each position of the throttle segments (11, 13), a clear opening in the form of a segment (17) of a circular ring is provided between the throttle segments (11, 13) and the discharge opening (7).

11. Drain fitting (1) according to one of the preceding claims, **characterized in that** the at least one upper throttle segment (11) has at least one bearing arm (16), which engages in at least one receptacle (9) arranged in the vicinity of the discharge opening (7), wherein the throttle element (10) can be inserted into the receptacle (9), especially if required.

12. Drain fitting (1) according to Claim 11, **characterized in that** the connection between the at least one bearing arm (16) and the receptacle (9) is a snap-fit connection (18).

13. Drain fitting (1) according to one of Claims 10 through 12, **characterized in that** the segment (17) of the circular ring, not including the bearing arms (16), extends completely around the central axis (M).

14. Drain fitting (1) according to one of the preceding claims, **characterized in that** the taper angle (α) of the cone is greater than 90°; and/or **in that** the cone is rounded or flattened or pointed at the apex (19).

15. Toilet tank arrangement comprising a drain fitting (1) according to one of the preceding claims and a toilet tank with an outlet opening, wherein the retaining unit (6) extends into the outlet opening.

## Revendications

1. Garniture d'écoulement (1) pour un réservoir de chasse d'eau, comprenant
un corps de soupape (2) avec un élément d'étanchéité (4) coopérant avec un siège de soupape (3), le corps de soupape (2) pouvant être déplacé avec l'élément d'étanchéité (4) depuis le siège de soupape (3) le long d'un axe médian (M) d'une position de repos dans une position de rinçage et de la position de rinçage dans la position de repos,
un boîtier de soupape (5) dans lequel le corps de soupape (2) est supporté de manière déplaçable, et une unité de fixation (6) avec une ouverture d'évacuation continue (7), ledit siège de soupape (3) s'étendant autour de l'ouverture d'évacuation (7) et l'unité de fixation (6) présentant une portion de palier (8) pour le support du boîtier de soupape (5), vu dans la position d'installation au-dessus du siège de soupape (3),
la garniture d'écoulement (1) comprenant en outre un élément d'étranglement ajustable (10) pour l'étranglement ajustable du flux d'eau de rinçage s'écoulant à travers l'ouverture d'évacuation (7), l'élément d'étranglement (10) présentant au moins un segment d'étranglement supérieur (11) avec une surface d'étranglement (12) et au moins un segment d'étranglement inférieur (13) avec une surface d'étranglement (14), et les segments d'étranglement (11, 13) pouvant être coulissés l'un par rapport à l'autre de telle sorte que la section transversale de l'élément d'étanchéité (10) soit variable,
**caractérisée en ce que** la surface d'étranglement (12) de l'au moins un segment d'étranglement supérieur (11) présente la forme d'un segment d'une surface d'enveloppe d'un cône, et **en ce que** la surface d'étranglement (14) de l'au moins un segment d'étranglement inférieur (13) présente la forme d'un segment d'une surface d'enveloppe d'un cône.

2. Garniture d'écoulement (1) selon la revendication 1, **caractérisée en ce que** le segment d'étranglement inférieur (13), vu dans une première position de fin de course dans la direction d'écoulement (S), est sensiblement complètement recouvert par le segment d'étranglement supérieur (11) et **en ce que** le segment d'étranglement inférieur (13) peut être coulissé dans la direction d'une deuxième position de fin de course de telle sorte que le degré de recouvrement des deux segments d'étranglement (11, 13) diminue au fur et à mesure de l'augmentation du coulissement, l'effet d'étranglement de l'élément d'étranglement (10) augmentant globalement.

3. Garniture d'écoulement (1) selon la revendication 2, **caractérisée en ce que** dans la deuxième position de fin de course, les segments d'étranglement (11, 13) sont situés l'un par rapport à l'autre de telle sorte que l'on obtienne un cône dont la circonférence s'étend essentiellement complètement autour de l'axe médian (M).

4. Garniture d'écoulement (1) selon la revendication 2 ou 3, **caractérisée en ce que** la quantité de rinçage pour un diamètre (D) de l'ouverture d'évacuation (7) de 45 mm dans la première position de fin de course des segments d'étranglement se situe dans la plage de 2,3 à 2,5 litres par seconde et dans le cas d'une position d'ouverture intermédiaire des segments d'étranglement, est de 2,0 à 2,2 litres par seconde et dans la deuxième position de fin de course des segments d'étranglement, est de 1,7 à 1,9 litre par seconde.

5. Garniture d'écoulement (1) selon l'une quelconque des revendications précédentes, **caractérisée en ce que** le nombre des segments d'étranglement supérieurs (11) est égal au nombre des segments d'étranglement inférieurs (13).

6. Garniture d'écoulement (1) selon l'une quelconque des revendications précédentes, **caractérisée en ce qu'**à chaque fois les segments d'étranglement supérieurs (11) sont reliés les uns aux autres et peuvent de ce fait pivoter ensemble ; et/ou **en ce qu'**à chaque fois les segments d'étranglement inférieurs (13) sont reliés les uns aux autres et peuvent de ce fait pivoter ensemble.

7. Garniture d'écoulement (1) selon l'une quelconque des revendications précédentes, **caractérisée en ce que** le segment d'étranglement inférieur (13) est en liaison avec le segment d'étranglement supérieur (11) de manière déplaçable, en particulier par pivotement, l'un des segments d'étranglement (11, 13) étant disposés fixement dans l'ouverture d'évacuation tandis que l'autre des segments d'écoulement (13, 11) peut être ajusté par rapport au segment d'étranglement disposé fixement (11, 13).

8. Garniture d'écoulement (1) selon l'une quelconque des revendications précédentes, **caractérisée en ce que** le segment d'étranglement inférieur (13) est disposé sur un palier pivotant (15), du côté inférieur au niveau de l'élément d'étranglement supérieur (11) et est supporté de manière déplaçable par le biais du palier pivotant (15).

9. Garniture d'écoulement (1) selon l'une quelconque des revendications précédentes, **caractérisée en ce que** les deux segments d'étranglement (11, 13) sont situés centralement dans l'ouverture d'évacuation (7) .

10. Garniture d'écoulement (1) selon l'une quelconque des revendications précédentes, **caractérisée en ce que** dans chaque position des segments d'étranglement (11, 13), une ouverture libre en forme de segment (17) d'une bague circulaire est prévue entre les segments d'étranglement (11, 13) et l'ouverture d'évacuation (7).

11. Garniture d'écoulement (1) selon l'une quelconque des revendications précédentes, **caractérisée en ce que** l'au moins un segment d'étranglement supérieur (11) présente au moins un bras de support (16) qui s'engage dans au moins un logement (9) disposé dans la région de l'ouverture d'évacuation (7), l'élément d'étranglement (10) pouvant être inséré dans le logement (9), en particulier au besoin.

12. Garniture d'écoulement (1) selon la revendication 11, **caractérisée en ce que** la liaison entre l'au moins un bras de support (16) et le logement (9) est une liaison par encliquetage (18).

13. Garniture d'écoulement (1) selon l'une quelconque des revendications 10 à 12, **caractérisée en ce que** le segment (17) de la bague circulaire, à l'exception des bras de support (16), s'étend complètement autour de l'axe médian (M).

14. Garniture d'écoulement (1) selon l'une quelconque des revendications précédentes, **caractérisée en ce que** l'angle de conicité (α) du cône est supérieur à 90° ; et/ou **en ce que** le cône est réalisé sous forme arrondie ou aplatie ou en pointe au niveau de la pointe du cône (19).

15. Agencement de réservoir de chasse d'eau comprenant une garniture d'écoulement (1) selon l'une quelconque des revendications précédentes et un réservoir de chasse d'eau avec une ouverture d'évacuation, l'unité de fixation (6) s'étendant à l'intérieur de l'ouverture d'évacuation.
